# EUROPÄISCHE PATENTSCHRIFT

(11) **EP 1 288 057 B1**
(45) Veröffentlichungstag und Bekanntmachung des Hinweises auf die Patenterteilung: **18.10.2006**
(21) Anmeldenummer: 02016134.5
(22) Anmeldetag: 19.07.2002
(51) Int. Cl.: B60K 37/00, G02B 27/01

(54) **Projektionsanordnung für ein Kraftfahrzeug**
Projection apparatus for a motor vehicle
Dispositif de projection pour véhicule à moteur

(30) Priorität: 18.08.2001 DE 10140631
(43) Veröffentlichungstag der Anmeldung: 05.03.2003
(73) Patentinhaber: Bayerische Motoren Werke Aktiengesellschaft, 80809 München (DE)
(72) Erfinder: Hofhaus, Jörn, Dr., 85356 Freising (DE)

(56) Entgegenhaltungen:
- EP-A- 0 508 323
- EP-A- 1 031 445
- EP-B- 0 202 460
- DE-A- 3 347 271
- DE-A- 4 319 904
- PATENT ABSTRACTS OF JAPAN Bd. 010, Nr. 246, 23. August 1986 (1986-08-23) -& JP 61 075025 A (NISSAN), 17. April 1986 (1986-04-17)

## Beschreibung

Die Erfindung betrifft eine Projektionsanordnung für ein Kraftfahrzeug zur Projektion eines Bildes auf eine Wiedergabefläche, gemäß dem Oberbegriff von Patentanspruch 1.

Aus PATENT ABSTRACTS OF JAPAN Bd. 10, Nr. 246, 23. August 1986 (1986-08-23)-&JP 61 75025 A (NISSAN), 17. April 1986 (1986-04-17) ist eine solche Projektionsanordnung bekannt, bei welcher die gesamte Projektionsoptik in ein von Blasluft durchströmtes Gehäuse eingebunden ist.

Aus EP-A-0 508 323 ist eine Projektionsanordnung bekannt, bei welcher die Projektion eines Lichtbündels auf den unteren Randbereich einer Windschutzscheibe über Blasöffnungen erfolgt, die als solche der Scheibenbelüftung dienen.

Aus DE 3712663 A1ist eine Projektionsanordnung bekannt. Bei dieser herkömmlichen Projektionsanordnung ist in einem unterhalb einer Fahrzeug-Windschutzscheibe liegenden Bereich eine Projektionseinrichtung vorgesehen, die unter Verwendung einer Projektionslinse ein Lichtbündel erzeugt das zunächst im wesentlichen horizontal ausgerichtet ist und über einen in ein Armaturenbrett integrierten Umlenkspiegel durch eine in dem Armaturenbrett ausgebildete Öffnung in die Fahrzeug-Windschutzscheibe eingespiegelt wird ("Head-Up-Display"). Die Abbildungseigenschaften dieser Projektionsanordnung sind derart gewählt, dass das in die Fahrzeug-Windschutzscheibe eingespiegelte Bild unter geringem Akkomodationsbedarf wahrnehmbar ist.

Aus DE 3347271 A1 ist ebenfalls eine Projektionsanordnung für ein Kraftfahrzeug bekannt, bei welcher eine Projektionseinrichtung und eine zur Umlenkung eines Strahlenbündels vorgesehene Umlenk-Spiegelanordnung zu einer Baugruppe zusammengefasst sind, die in ein Fahrzeug-Armaturenbrett eingesetzt ist.

Der Erfindung liegt die Aufgabe zugrunde, eine Projektionsanordnung zur Einspiegelung eines Bildes in eine, im Bereich eines Fahrzeug-Armaturenbrettes liegende, oder dieser zumindest benachbart angeordnete Bild-Wiedergabefläche zu schaffen, welche eine im Hinblick auf eine hochwertige Bildwiedergabe günstige Anordnung der Projektionsanordnung ermöglicht.

Diese Aufgabe wird erfindungsgemäß gelöst, durch eine Projektionsanordnung gemäß Patentanspruch 1.

Dadurch wird es auf vorteilhafte Weise möglich, eine gegenüber herkömmlichen Projektionsanordnungen große Aufweitung des zur Einspiegelung vorgesehenen Strahlenbündels aus einem tief in einem Fahrzeug-Armaturenbrett liegenden Bereich vorzunehmen.

Die erfindungsgemäße Projektionsanordnung kann in besonders vorteilhafter Weise im Bereich der Mittelkonsole eines Kraftfahrzeuges angeordnet sein und gestattet dabei die Einspiegelung eines Bildes in eine Fahrzeugfrontscheibe aus einem Armaturenbrettbereich, wobei ein Teil des Strahlenweges unterhalb eines zu den Mittelkonsolendüsen führenden Luftkanales verläuft und der Strahlenweg auf seinem Weg zur Fahrzeugfrontscheibe die Wandung des Luftkanales zweifach durchsetzt.

Gemäß einer besonders bevorzugten Ausführungsform der Erfindung sind die Projektionseinrichtung und die Luftkanaleinrichtung als vormontierte Baugruppe in eine Armaturenbrettanordnung integriert. Dadurch wird es auf vorteilhafte Weise möglich, die durch das Zusammenspiel der Kanaleinrichtung mit der Projektionseinrichtung bestimmten Abbildungseigenschaften des Systems in einem engen Toleranzbereich einzuhalten.

Bei der Wiedergabefläche zur Wiedergabe des durch die Projektionseinrichtung generierten Bildes handelt es sich vorzugsweise um eine an die Armaturenbrettanordnung angrenzende Fahrzeug-Frontscheibe. Alternativ hierzu - oder gegebenenfalls auch in Kombination hiermit - ist es möglich, die Wiedergabefläche als beispielsweise im Lenkradbereich angeordnete Displayfläche auszubilden.

In vorteilhafter Weise ist ein den Strahlweg durchsetzender Abschnitt der Lichteintrittszone und/oder der Lichtaustrittszone derart ausgebildet, dass dieser eine im Hinblick auf die gewünschten Abbildungseigenschaften vorgegebene Brechungscharakteristik aufweist. Diese gewünschten Abbildungseigenschaften können beispielsweise dadurch erreicht werden, dass die Lichteintrittszone und/oder die Lichtaustrittszone als Projektionslinse ausgebildet ist bzw. sind. Diese Projektionslinse ist vorzugsweise als Fresnellinse ausgebildet.

Es ist weiterhin in vorteilhafter Weise möglich, einen Abschnitt der LuftLeitungseinrichtung derart auszubilden, dass dieser eine Reflexionszone bildet. Der Reflexionseffekt kann hierbei durch Total-Reflexionseffekte oder auch durch Spiegelzonen erreicht werden.

Gemäß einer besonders bevorzugten Ausführungsform der Erfindung ist die Projektionseinrichtung im Bereich einer Fahrzeugmittelkonsole angeordnet, wobei die Luftleitungseinrichtung einen Luftleitungs-Kanal bildet, der sich zu einer im Höhenbereich eines Fahrzeuglenkrads angeordneten, vorzugsweise in den Fahrzeuginnenraum hinein abstrahlenden Auslassdüsenanordnung erstreckt.

In einem in Einbauposition unterhalb der Lichteintrittszone des Luft-Leitungskanales liegenden Bereich ist eine Spiegelanordnung zur Umlenkung eines zunächst im wesentlich horizontal ausgerichtet verlaufenden Strahlenbündels in ein im wesentlichen vertikal ausgerichtet verlaufendes z.B. auf die Fahrzeug-Frontscheibe gerichtetes Lichtbündel vorgesehen.

Durch die erfindungsgemäße Projektionsanordnung können technische Daten wie beispielsweise die Motordrehzahl, die Fahrzeuggeschwindigkeit oder anderweitige Angaben zum Fahrzustand in die Fahrzeug-Frontscheibe oder auf eine Instrumententafeloberfläche projiziert werden. Durch die erfindungsgemäße Ausgestaltung des Luft-Leitungskanales wird hierbei der für einen günstigen Strahlengang erforderliche lichtdurchlässige Bauraum bereitgestellt. Die erfindungsgemäße Projektionsanordnung eignet sich damit insbesondere zum Einsatz im Mittelkonsolenbereich klimatisierter Kraftfahrzeuge.

Die beiden lichtdurchlässigen Zonen der Luft-Kanaleinrichtung sind vorzugsweise aus einem im relevanten Wellenlängenbereich optisch durchlässigen Material z.B. Plexiglas POM oder dergleichen gefertigt. Die Lichteintrittszone und/oder die Lichtaustrittszone können so ausgeführt werden, dass diese die Abbildungseigenschaften der Projektionsanordnung im wesentlichen nicht beeinflussen. Alternativ hierzu ist es jedoch auch möglich, die beiden Abschnitte der Luft-Kanaleinrichtung derart auszubilden, dass durch diese vorbestimmte optische Wirkungen erreicht werden, insbesondere eine Aufweitung des durch die Projektionseinrichtung generierten Strahlenbündels. Die erfindungsgemäße Projektionsanordnung zeichnet sich durch einen gegenüber bisherigen Konstruktionen deutlich verminderten Bauraumbedarf aus.

Weitere Einzelheiten der Erfindung ergeben sich aus der nachfolgenden Beschreibung in Verbindung mit der Zeichnung. Es zeigen:
- **Fig. 1**: eine perspektivische Darstellung einer im Bereich einer Fahrzeugmittelkonsole angeordneten erfindungsgemäßen Projektionsanordnung;
- **Fig. 2**: eine ergänzende perspektivische Ansicht der in Fig. 1 dargestellten Projektionsanordnung aus einer Betrachtungsposition im Bereich einer Beifahrer-Türöffnung;
- **Fig.3**: eine Schnittansicht einer Projektionsanordnung mit einem in den optischen Strahlenweg eintauchenden Luftkanal und einer in dem Luftkanal ausgebildeten Reflexionszone;
- **Fig. 4**: eine Schnittansicht zur Erläuterung einer ersten Ausführungsform der erfindungsgemäßen Projektionsanordnung mit einer, in ein Armaturenbrett integrierten Projektionsfläche und einem nur partiell in den optischen Strahlenweg eintauchenden Luftkanal;

- **Fig. 5**: eine Schnittansicht einer weiteren Ausführungsform einer erfindungsgemäßen Projektionsanordnung zur Einspiegelung eines Bildes in eine Fahrzeug-Windschutzscheibe mit einer doppelseitig optisch durchlässigen Luft-Kanaleinrichtung und einer unmittelbar unterhalb dieser Luft-Kanaleinrichtung angeordneten Umlenkspiegeleinrichtung;
- **Fig. 6**: eine Schnittansicht einer weiteren Ausführungsform einer erfindungsgemäßen Projektionsanordnung mit einer in einem Armaturenbrett ausgebildeten Projektionsfläche und einer Luft-Kanaleinrichtung mit einer linsenartig ausgebildeten Lichteintrittszone sowie einer linsenartig ausgebildeten und vergrößerten Lichtaustrittszone.

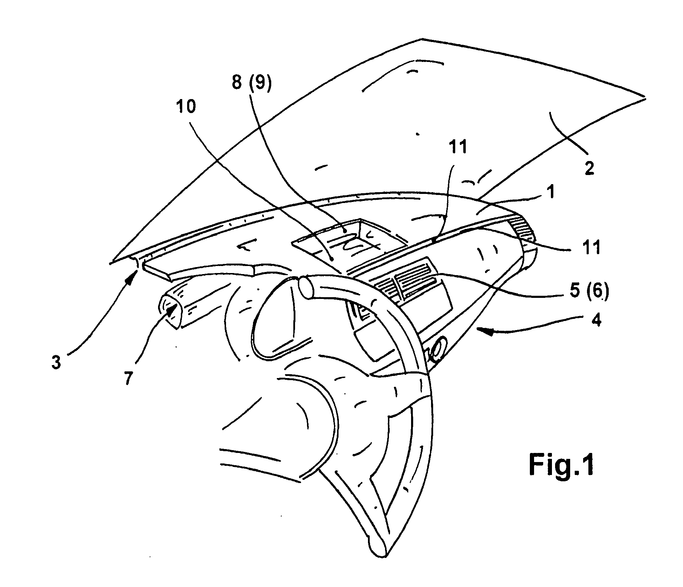

In Fig. 1 ist ein ein Armaturenbrett 1 umfassender und an eine Frontscheibe 2 angrenzender Armaturenbrettbereich eines Kraftfahrzeuges dargestellt.

In dem Armaturenbrett 1 sind in einem einer unteren Horizontalkante der Frontscheibe 2 benachbarten Bereich Düsenanordnungen 3 ausgebildet, zur Belüftung der Innenseite der Frontscheibe 2, insbesondere im Rahmen einer Defrost-Phase. In einem, bezogen auf diese Düsenanordnungen 3 weiter innen liegenden Konsolenbereich 4 des Armaturenbrettes 1 ist eine weitere Düsenanordnung 5 vorgesehen, über welche klimatisierte Luft in einen Fahrgastraum hinein abgeblasen werden kann. Die Einblasrichtung der über diese zentrale Düsenanordnung 5 eingeblasenen Luft kann über eine Leitgitteranordnung 6 variabel eingestellt werden.

Die Zuleitung der über die zentrale Düsenanordnung 5 eingeblasenen Luft erfolgt über einen im Armaturenbrett 1 verlaufenden und von dem Armaturenbrett 1 weitgehend abgedeckten Luftkanal 7.

In einem zwischen der Frontscheibe 2 und der zentralen Düsenanordnung 5 liegenden Bereich ist auf der der Frontscheibe 2 zugewandten Oberseite des Armaturenbrettes 1 eine Projektionsöffnung 8 ausgebildet, durch welche hindurch ein Lichtstrahlenbündel auf die Frontscheibe 2 projizierbar ist.

Die Projektionsöffnung 8 ist durch eine in der Darstellung nicht erkennbare voll transparente Wandung abgedeckt. Diese transparente Wandung bildet eine Lichtaustrittszone 9 des zu der zentralen Düsenanordnung 5 führenden Abschnitts des Luftkanales 7.

Unterhalb der voll transparenten Wandung ist eine weitere voll transparente Wandung vorgesehen, welche eine Lichteintrittszone 10 im Bereich der Unterseite des zu der zentralen Düsenanordnung 5 führenden Luftkanales 7 bildet.

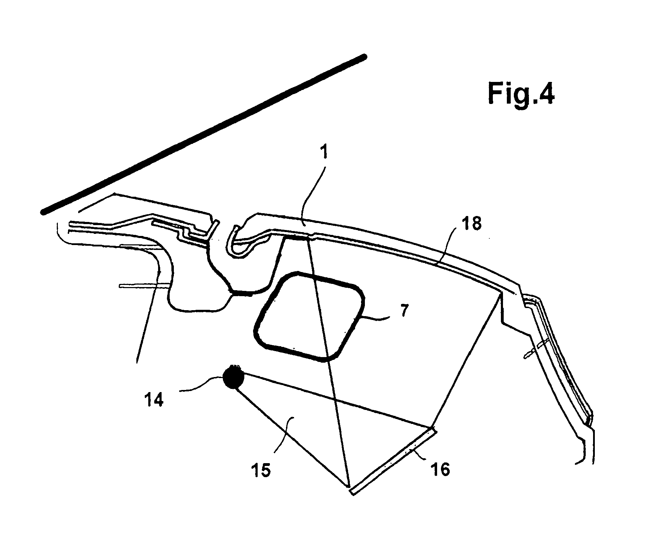

Unterhalb dieser Lichteintrittszone 10 der Luft-Kanaleinrichtung 7 befindet sich eine Projektionseinrichtung 14 (vgl. Fig.4), durch welche das auf die Frontscheibe 2 projizierte Strahlenbündel generiert wird.

Die Projektionsöffnung 8 ist derart angeordnet, dass diese eine großflächige Projektion eines Bildes auf die Fahrzeug-Frontscheibe 2 ermöglicht. Die Projektionsöffnung 8 ist hierzu von den Düsenanordnungen 3 zu der zentralen Düsenanordnung 5 hin versetzt angeordnet. Eine vordere Längskante 11 der Projektionsöffnung 8 erstreckt sich dabei nahe einem Übergangskantenbereich 12 des Armaturenbrettes 1.

Die Projektionsöffnung 8 weist bei der hier dargestellten Ausführungsform einen im wesentlichen rechteckigen Grundriss auf. Vorzugsweise ist die Projektionsöffnung 8 derart dimensioniert, dass diese gerade ausreicht, um das zur Projektion auf die Frontscheibe 2 vorgesehene Lichtbündel nicht unzulässig stark im Randbereich abzuschirmen.

Es ist möglich, die im Bereich der Projektionsöffnung 8 vorgesehene voll transparente Wandung 9 mit einer Blendeneinrichtung zu versehen, so dass der gewünschte Durchtrittsquerschnitt durch die Blendeneinrichtung bestimmt ist. Diese Blendeneinrichtung kann als Farb-Auftrag auf die, die lichtdurchlässigen Zonen 9, 10 bildende Wandung ausgeführt sein. Es ist auch möglich, eine in dem Armaturenbrett 1 ausgebildete und hierbei die Projektionsöffnung 8 umsäumende Umfangskante so auszubilden, dass diese einen Abschnitt des auf die Frontscheibe 2 projizierten Strahlenbündels abschirmt.

Die oberhalb der der Projektionseinrichtung benachbarten Lichteintrittszone 10 unter Belassung des Luftkanalquerschnittes angeordnete, vorzugsweise die Projektionsöffnung 8 abdeckende Lichtaustrittszone 9, kann entsprechend der Aufweitung des Strahlenbündels größer bemessen sein als die Lichteintrittszone 10.

Es ist möglich, in dem zwischen den lichtdurchlässigen Zonen des Luftkanales 7 verbleibenden Raum eine Blenden- oder Gitterstruktur anzuordnen, welche den Luftkanal gegen eine tiefere Einsicht von oben durch die Projektionsöffnung 8 hindurch abschirmt. Diese Gittereinrichtung kann beispielsweise durch im wesentlichen horizontal ausgerichtete Lamellenelemente erreicht werden, wobei der Abstand dieser Lamellenelemente und deren Tiefe derart abgestimmt sind, dass ein Einblick in die Luft-Kanaleinrichtung aus üblichen Betrachtungspositionen nicht möglich ist.

Diese im Bereich der Luft-Kanaleinrichtung 7 angeordnete Blendeneinrichtung kann mit einer lichtabsorbierenden Beschichtung versehen sein, zur Vermeidung etwaiger Spiegelreflexe im Bereich der Projektionsöffnung 8.

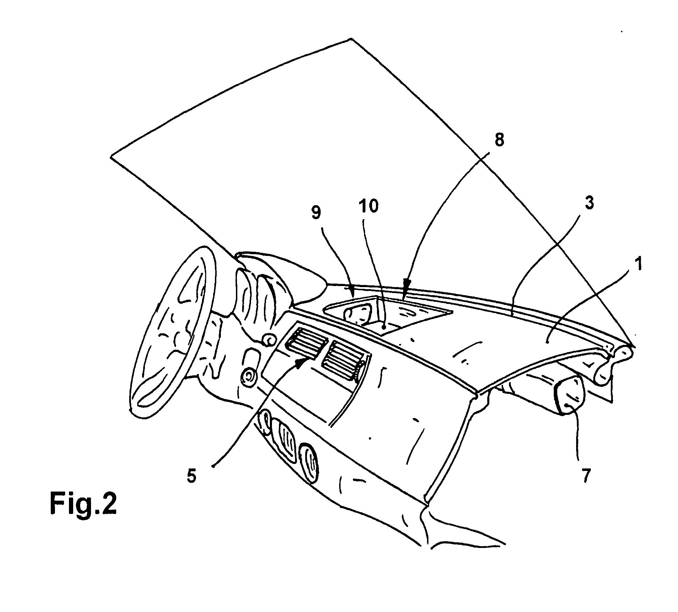

In Fig. 2 ist die vorangehend beschriebene Armaturenbrettanordnung aus einer im Bereich einer Beifahrer-Türöffnung liegenden Betrachtungsposition dargestellt. Deutlich erkennbar ist in dieser Ansicht die in unmittelbarer Nachbarschaft der zentralen Düsenanordnung 5 liegende Projektionsöffnung 8, die zweifach durch voll transparente Zonen 9, 10 des in dem Armaturenbrett 1 verlaufenden Luftkanales 7 abgedeckt ist. Die Projektionsöffnung 8 befindet sich im oberen Bereich des Armaturenbrettes 1 in einer von einer Defroster-Düsenanordnung 3 beabstandeten und zu einem oberen Kantenbereich der zentralen Düsenanordnung 5 vorgezogenen Abschnitt.

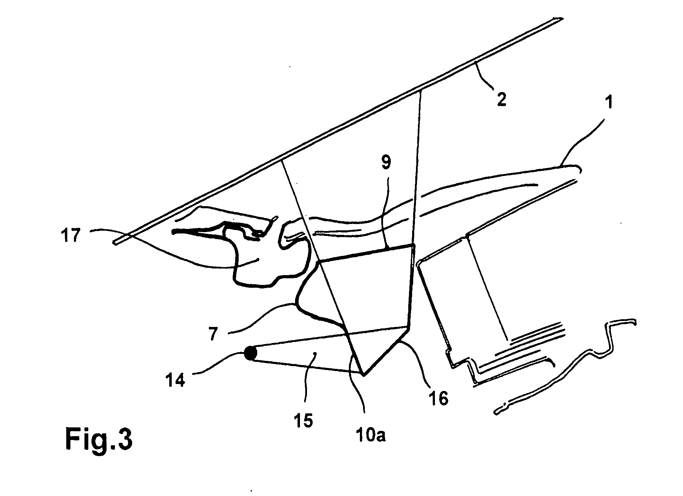

In Fig. 3 ist eine weitere Variante eines mit einer Projektionsanordnung versehenen Armaturenbrettbereiches eines Kraftfahrzeuges dargestellt. Die Projektionsanordnung umfasst eine in das Armaturenbrett 1 integrierte und unterhalb des Luftkanales 7 angeordnete Projektionseinrichtung 14. Die Projektionseinrichtung 14 ist bei dieser Ausführungsform derart angeordnet, dass das durch diese generierte Lichtbündel 15 zunächst einen im wesentlichen horizontalen Verlauf aufweist. Das Lichtbündel 15 tritt über eine voll transparente Zone 10a in den Innenbereich des Luftkanales 7 ein und trifft hierbei auf einen Spiegelabschnitt 16, der ebenfalls in dem Luftkanal 7 angeordnet ist. An diesem Spiegelabschnitt 16 wird das Lichtbündel 15 zu einer Projektionsfläche die Fahrzeug-Frontscheibe 2) umgelenkt.

Das an dem Spiegelabschnitt 16 umgelenkte Lichtbündel 15 tritt über die voll transparente Zone 9 des Luftkanales 7 aus diesem heraus und trifft hierbei auf die Projektionsfläche (Frontscheibe 2).

Der mit einer die Lichteintrittszone 10a und die Lichtaustrittszone 9 bildenden transparenten Wandung versehene Luftkanal 7 dient der Zuleitung von Frischluft zu einer im Mittelkonsolenbereich des Armaturenbretts 1 angeordneten zentralen Düsenanordnung 5 (Fig. 1 und 2). Der erfindungsgemäß ausgestaltete Luftkanal 7 verläuft abschnittsweise in dem Armaturenbrett 1 unterhalb eines zum Trocknen der Fahrzeugfrontscheibe 2 vorgesehenen Warmluftkanals 17.

In Fig. 4 ist eine erste Ausführungsform einer erfindungsgemäßen Projektionsanordung dargestellt, bei welcher das durch die Projektionseinrichtung 14 generierte Lichtbündel 15 auf einen unterhalb des Luftkanales 7 liegenden Spiegelabschnitt 16 projiziert wird, wobei der Luftkanal 7 derart ausgebildet ist, dass dieser abschnittsweise in das an dem Spiegelabschnitt 16 reflektierte Lichtbündel eintaucht.

Die in das an dem Spiegelabschnitt 16 reflektierte Lichtbündel eintauchenden Abschnitte des Luftkanales 7 sind aus einem lichtdurchlässigen Material ausgebildet und derart geformt, dass sich eine vorgegebene Abbildungscharakteristik ergibt. Die durch die optischen Eigenschaften der in das reflektierte Strahlenbündel eintauchenden Abschnitte des Luftkanales 7 veränderte Abbildung des Strahlenbündels kann durch entsprechende Beeinflussung der seitens der Projektionseinrichtung 14 verarbeiteten Bilddaten kompensiert werden.

Bei der hier dargestellten Ausführungsform ist die zur Wiedergabe der in dem Lichtbündel 15 enthaltenen Bildinformationen vorgesehene Projektionsfläche 18 in das Armaturenbrett 1 integriert. Insbesondere bei dieser Ausführungsform kann die Projektionsfläche die Instrumententafel des Kraftfahrzeuges bilden. Die Projektionsfläche kann integral mit dem Luftkanal ausgebildet sein.

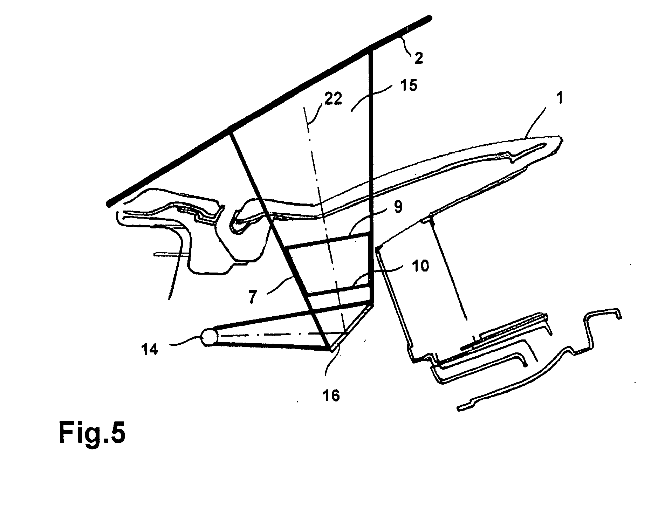

In Fig. 5 ist eine weitere Variante einer in ein Armaturenbrett 1 integrierten erfindungsgemäßen Projektionsanordnung dargestellt, wobei bei diesem Ausführungsbeispiel der Luftkanal 7 derart ausgebildet ist, dass durch diesen die Ausbreitung des an dem Spiegelabschnitt 16 reflektierten Lichtbündels 15 nur geringfügig beeinflusst wird. Hierzu sind die Lichteintrittszone 10 und die Lichtaustrittszone 9 des Luftkanales 7 als dünnwandige, im wesentlichen plane Abschnitte ausgebildet, die im wesentlichen senkrecht zu einer optischen Hauptachse 22 des an dem Spiegelabschnitt 16 reflektierten Lichtbündels 15 ausgerichtet sind. Der in Licht-Ausbreitungsrichtung stromabwärts der voll transparenten Lichteintrittszone 10 liegende voll transparente Wandungsabschnitt der Lichtaustrittszone 9 des Luftkanales 7 ist entsprechend der durch die Abbildungseigenschaften der Projektionseinrichtung 14 bestimmten Strahlaufweitung vergrößert ausgebildet.

Bei der in Fig. 5 dargestellten Ausführungsform wird durch den zumindest abschnittsweise voll transparent ausgebildeten Luftkanal 7 eine Projektionsanordnung geschaffen, durch welche das seitens der Projektionseinrichtung 14 generierte Lichtbündel in die Frontscheibe 2 als Projektionsfläche eingespiegelt werden kann.

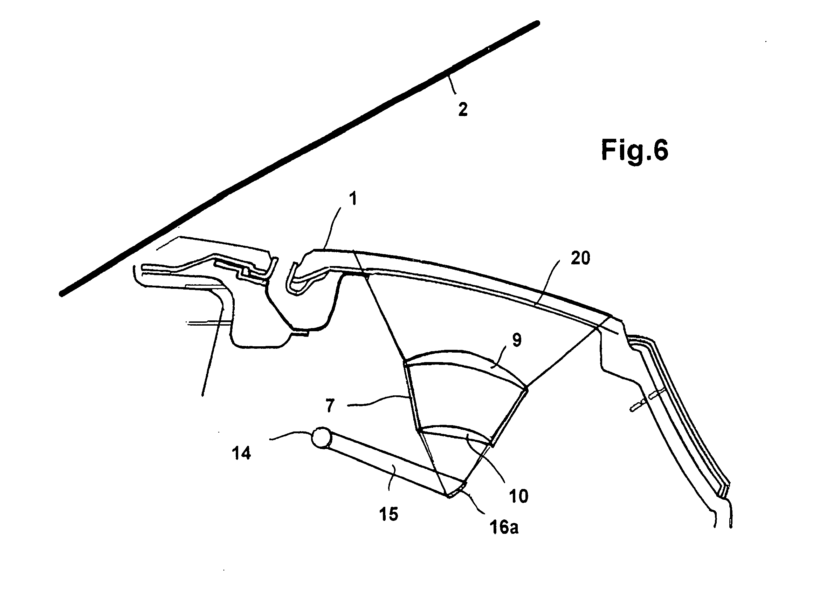

In Fig. 6 ist eine weitere Variante einer erfindungsgemäßen Projektionsanordnung dargestellt, bei welcher die an dem Luft-Leitungskanal 7 vorgesehenen lichtdurchlässigen Zonen 10, 9 als Linsenelemente ausgebildet sind, um hierdurch einen gewünschten Abbildungseffekt des durch die Projektionseinrichtung 14 generierten Lichtbündels 15 zu erreichen. Die Abbildungseigenschaften des unter Einbeziehung der Luft-Kanaleinrichtung 7 geschaffenen optischen Systems werden weiterhin auch durch die Abbildungscharakteristik des bei diesem Ausführungsbeispiel zur Umlenkung des Lichtbündels 15 vorgesehenen Spiegelabschnittes 16a bestimmt.

Bei diesem Ausführungsbeispiel wird das seitens der Projektionseinrichtung 14 generierte Lichtbündel 15 über die als Linsen wirksamen transparenten Abschnitte 9, 10 des Luftkanales 7 auf eine Projektionsfläche 20 projiziert, die in das Armaturenbrett 1 integriert ist.

Die in Fig. 6 dargestellte Projektionsanordnung eignet sich auch zur Einspiegelung des Lichtbündels 15 in die oberhalb des Armaturenbretts 1 verlaufende Frontscheibe 2.

Die bei den vorangehend beschriebenen Ausführungsbeispielen verwendete Projektionseinrichtung 14 kann insbesondere als CRT-Projektionseinrichtung, als TFT-Projektionseinrichtung oder gemäß einer besonders bevorzugten Ausführungsform der Erfindung als Spiegel-Array Projektionseinrichtung ausgebildet sein. Den bei der Einspiegelung des durch die Projektionseinrichtung 14 generierten Lichtbündels auf eine Wiedergabefläche (beispielsweise eine räumlich gekrümmte Frontscheibe) maßgeblichen besonderen Abbildungseigenschaften kann durch Bildverarbeitungsprozeduren Rechnung getragen werden. Hierbei können insbesondere Störeinflüsse auf Grund der Krümmung der Frontscheibe sowie auf Grund der Abbildungseigenschaften des Luftkanales auftretende Fehler kompensiert werden.

Über die erfindungsgemäße Projektionsanordnung können Bildinformationen wiedergegeben werden, wie beispielsweise Informationen zum momentanen Fahrzustand eines Kraftfahrzeuges, Informationen zum Betriebszustand des Motors oder anderweitige Informationen. Durch die Einbeziehung einer den Abbildungsweg eines durch die Projektionseinrichtung generierten Lichtbündels durchsetzenden Kanaleinrichtung in das Abbildungssystem ergibt sich hinsichtlich der Anordnung der Projektionseinrichtung eine erheblich vergrößerte konstruktive Freiheit. Insbesondere wird es möglich, über eine erfindungsgemäß ausgestaltete Projektionsanordnung den unmittelbar über den üblicherweise im Mittelkonsolenbereich vorgesehenen, zentral in den Fahrgastraum abströmenden Luftdüsen vorhandenen Bereich des Armaturenbrettes, mit einer Projektionsöffnung zu versehen.

## Patentansprüche

1. Projektionsanordnung mit:
- einer Projektionseinrichtung (14) zur Ausgabe eines Lichtbündels und Projektion eines Bildes auf eine Wiedergabefläche,
- wobei in einem zwischen der Wiedergabefläche und der Projektionseinrichtung (14) verlaufenden Strahlenweg ein Luftkanal (7) vorgesehen ist, der den Strahlenweg durchsetzt und die Wandung des Luftkanales (7) eine Lichtaustrittszone (9) aufweist, über welche das Lichtbündel aus dem Luftkanal (7) heraustritt,
- der Luftkanal (7) im Bereich der Lichtaustrittszone (9) aus einem transparenten, oder im relevanten Wellenlängenbereich optisch durchlässigen Material gefertigt ist, und
- der Luftkanal (7) weiterhin eine Lichteintrittszone (10) aufweist und der Strahlenweg die Wandung des Luftkanales (7) über die Lichteintrittszone (10) und die Lichtaustrittszone (9) zweifach durchsetzt,
**dadurch gekennzeichnet, dass** in einem in Einbauposition unterhalb der Lichteintrittszone (10) liegenden Bereich eine Spiegelanordnung vorgesehen ist, zur Umlenkung eines im wesentlichen horizontal ausgerichtet verlaufenden Strahlenbündels (15) in ein im wesentlichen vertikal ausgerichtet verlaufendes Strahlenbündel.

2. Projektionsanordnung nach Anspruch 1, **dadurch gekennzeichnet, dass** die Projektionseinrichtung (14) und der Luftkanal (7) in eine Armaturenbrettanordnung integriert sind.

3. Projektionsanordnung nach Anspruch 2, **dadurch gekennzeichnet, dass** die Wiedergabefläche durch eine an die Armaturenbrettanordnung angrenzende Scheibe, insbesondere Frontscheibe (2) gebildet ist.

4. Projektionsanordnung nach Anspruch 2, **dadurch gekennzeichnet, dass** die Wiedergabefläche als im Lenkradbereich angeordnete Displayfläche (20) ausgebildet ist.

5. Projektionsanordnung nach wenigstens einem der Ansprüche 1 bis 4, **dadurch gekennzeichnet, dass** ein den Strahlweg durchsetzender Abschnitt des Luftkanales (7) derart ausgebildet ist, dass dieser eine vorgegebene Brechungscharakteristik aufweist.

6. Projektionsanordnung nach wenigstens einem der Ansprüche 1 bis 5, **dadurch gekennzeichnet, dass** ein Abschnitt des Luftkanales (7) als Linseneinrichtung ausgebildet ist.

7. Projektionsanordnung nach Anspruch 6, **dadurch gekennzeichnet, dass** die Lichtaustrittszone (9) des Luftkanales (7) als Linseneinrichtung ausgebildet ist.

8. Projektionsanordnung nach Anspruch 6 oder 7, **dadurch gekennzeichnet, dass** die Lichteintrittszone (10) des Luftkanales (7) als Linseneinrichtung ausgebildet ist.

9. Projektionsanordnung nach Anspruch 6 oder 7, **dadurch gekennzeichnet, dass** die Linseneinrichtung als Fresnellinse ausgebildet ist.

10. Projektionsanordnung nach wenigstens einem der Ansprüche 1 bis 9, **dadurch gekennzeichnet, dass** ein Abschnitt des Luftkanales (7) eine Reflexionszone bildet.

11. Projektionsanordnung nach wenigstens einem der Ansprüche 1 bis 10, **dadurch gekennzeichnet, dass** die Projektionseinrichtung (14) im Bereich einer Mittelkonsole angeordnet ist.

12. Projektionsanordnung nach wenigstens einem der Ansprüche 1 bis 11, **dadurch gekennzeichnet, dass** der Luftkanal (7) sich zu einer im Höhenbereich eines Fahrzeugslenkrads angeordneten Auslassdüsenanordnung (5) erstreckt.

## Claims

1. A projection arrangement comprising:
- a projector (14) for outputting a light beam and projecting an image on to a reproducing surface,
- wherein an air duct (7) is provided in a path of rays between the reproducing surface and the projector (14) and extends through the path of rays, and the wall of the air duct (7) has a light exit zone (9) through which the beam leaves the air duct (7),
- in the area of the air exit zone (9), the air duct (7) is made of a material which is transparent or light-transmitting in the relevant wavelength region and
- the air duct (7) also comprises an air entry zone (10) and the path of rays intersects the wall of the air duct (7) twice, through the air entry zone (10) and the air exit zone (9),
**characterised in that**
a mirror arrangement which when installed is in a region under the air entry zone (10) is provided for converting a substantially horizontal beam (15) into a substantially vertical beam.

2. A projection arrangement according to claim 1, **characterised in that** the projector (14) and the air duct (7) are incorporated in a dashboard arrangement.

3. A projection arrangement according to claim 2, **characterised in that** the reproducing surface is in the form of a plate, especially a windscreen (2), adjoining the dashboard arrangement.

4. A projection device according to claim 2, **characterised in that** the reproduction surface is a display surface (20) in the steering-wheel area.

5. A projection arrangement according to at least one of claims 1 to 4, **characterised in that** a portion of the air duct (7) intersecting the path of rays is designed so as to have a set refraction characteristic.

6. A projection arrangement according to at least one of claims 1 to 5, **characterised in that** the portion of the air duct (7) is a lens arrangement.

7. A projection device according to claim 6, **characterised in that** the light exit zone (9) of the air duct (7) is a lens arrangement.

8. A projection arrangement according to claim 6 or claim 7, **characterised in that** the light entry zone (10) of the air duct (7) is a lens arrangement.

9. A projection device according to claim 6 or claim 7, **characterised in that** the lens arrangement is a Fresnel lens.

10. A projection arrangement according to at least one of claims 1 to 9, **characterised in that** a portion of the air duct (7) forms a reflecting zone.

11. A projection arrangement according to at least one of claims 1 to 10, **characterised in that** the projector (14) is disposed in a central control-panel area.

12. A projection arrangement according to at least one of claims 1 to 11, **characterised in that** the air duct (7) extends up to an outlet nozzle arrangement (5) disposed level with a steering-wheel of the vehicle.

## Revendications

1. Dispositif de projection comprenant :
- un équipement de projection (14) pour émettre un faisceau lumineux et projeter une image sur une surface de restitution,
- dans un trajet de faisceau entre la surface de restitution et l'équipement de projection (14), un canal d'aération (7) qui croise le trajet de faisceau, la paroi du canal d'aération (7) présentant une zone de sortie de lumière (9) par laquelle le faisceau lumineux sort du canal d'aération (7),
- le canal d'aération (7) dans la région de la zone de sortie de lumière (9) étant en un matériau transparent sur la plage de longueur d'ondes concernée, et
- le canal d'aération (7) présentant en outre une zone d'entrée de lumière (10) alors que le trajet de faisceau croise deux fois la paroi du canal d'aération au niveau de la zone d'entrée de lumière (10) et de la zone de sortie de lumière (9),
**caractérisé en ce qu'**
un dispositif de réflexion, dans une région située en position montée au-dessous de la zone d'entrée de lumière (10), dévie un faisceau lumineux (15) sensiblement horizontale, en un faisceau lumineux sensiblement vertical.

2. Dispositif de projection selon la revendication 1,
**caractérisé en ce que**
l'équipement de projection (14) et le canal d'aération (7) sont intégrés dans un dispositif de tableau de bord.

3. Dispositif de projection selon la revendication 2,
**caractérisé en ce que**
la surface de restitution est formée par un panneau voisin du dispositif de tableau de bord, en particulier un pare-brise (2).

4. Dispositif de projection selon la revendication 2,
**caractérisé en ce que**
la surface de restitution est conçue comme une surface d'affichage (20) disposée dans la région du volant.

5. Dispositif de projection selon au moins l'une quelconque des revendications 1 à 4,
**caractérisé en ce qu'**
un segment du canal d'aération (7) croisant le trajet de faisceau présente une caractéristique de réfraction prédéfinie.

6. Dispositif de projection selon au moins l'une quelconque des revendications 1 à 5,
**caractérisé en ce qu'**
un segment du canal d'aération (7) est un dispositif de lentille.

7. Dispositif de projection selon la revendication 6,
**caractérisé en ce que**
la zone de sortie de lumière (9) du canal d'aération (7) est un dispositif de lentille.

8. Dispositif de projection selon la revendication 6 ou 7,
**caractérisé en ce que**
la zone d'entrée de lumière (10) du canal d'aération (7) est un dispositif de lentille.

9. Dispositif de projection selon la revendication 6 ou 7,
**caractérisé en ce que**
le dispositif de lentille est une lentille de Fresnel.

10. Dispositif de projection selon au moins l'une quelconque des revendications 1 à 9,
**caractérisé en ce qu'**
un segment du canal d'aération (7) forme une zone de réflexion.

11. Dispositif de projection selon au moins l'une quelconque des revendications 1 à 10,
**caractérisé en ce que**
l'équipement de projection (14) est disposé dans la région d'une console centrale.

12. Dispositif de projection selon au moins l'une quelconque des revendications 1 à 11,
**caractérisé en ce que**
le canal d'aération (7) s'étend jusqu'à un dispositif de buse de sortie (5) disposé à la hauteur du volant du véhicule.
